## Europäisches Patentamt
## European Patent Office
## Office européen des brevets

(19)

(11) Numéro de publication: **0 096 644**
**A1**

(12)

# DEMANDE DE BREVET EUROPEEN

(21) Numéro de dépôt: **83420094.1**

(22) Date de dépôt: **06.06.83**

(51) Int. Cl.³: **B 65 G 1/04**
**B 21 D 43/00, B 65 G 47/88**

(30) Priorité: **09.06.82 FR 8210744**

(43) Date de publication de la demande:
**21.12.83 Bulletin 83/51**

(84) Etats contractants désignés:
**AT BE CH DE GB IT LI LU NL SE**

(71) Demandeur: **Etablissements A. Mure**
**57 cours Albert Thomas**
**F-69003 Lyon(FR)**

(72) Inventeur: **Dumas, Marc**
**2, Quai Gillet**
**Lyon 4ème Rhône(FR)**

(72) Inventeur: **Peron, Yves**
**5, Place Jean Jaurès**
**Lyon 7ème Rhône(FR)**

(74) Mandataire: **Maureau, Philippe**
**Cabinet Germain & Maureau Le Britannia - Tour C 20,**
**bld Eugène Déruelle**
**F-69392 Lyon Cédex 03(FR)**

(54) Dispositif de préparation et de transfert d'éléments allongés se présentant sous forme de fardeaux.

(57) Ce dispositif est du type comprenant une zone de stockage des éléments en fardeaux, constituée par une série de tréteaux parallèles (10) par exemple, auxquels sont associés des moyens permettant la préparation et le transfert des éléments vers un système d'utilisation (13), ces moyens étant constitués par une série de pièces (17) parallèles entre elles, et réparties sur la longueur de la zone de stockage, dont chacune présente une forme générale en V, et est montée pivotante autour d'un axe parallèle à la direction des éléments, de telle sorte que, au cours de sa rotation, les deux extrémités de chaque pièce puissent venir en contact, respectivement, avec le bord de la zone de stockage et avec le bord du système d'utilisation, des moyens étant prévus pour provoquer un pivotement simultané de toutes les pièces en V.

Selon l'invention, chaque pièce en V est articulée dans sa partie centrale, indépendamment des autres pièces, sur un support (14) prolongeant un tréteau (10) appartenant au dispositif de stockage des fardeaux.

Application à l'équipement de bancs de coupe de fers à béton.

FIG.5

1

# DISPOSITIF DE PREPARATION ET DE TRANSFERT D'ELEMENTS ALLONGES SE PRESENTANT SOUS FORME DE FARDEAUX

La présente invention a pour objet un dispositif de préparation et de transfert d'éléments allongés se présentant sous forme de fardeaux.

Les éléments longs et de faibles sections sont fréquemment conditionnés en vue de leur transport et de leur stockage sous forme de fardeaux importants. Avant d'être utilisés ces éléments doivent être démêlés et comptés. Tel est notamment le cas des ronds à béton, qui doivent être demêlés et comptés en vue de la réalisation de leur coupe.

Cette opération reste à ce jour totalement manuelle, nécessitant plusieurs opérateurs, notamment lorsque les éléments sont de faibles sections et flexibles, ce qui favorise leur enchevêtrement.

Dans le cas des ronds à béton, l'utilisation de plus en plus fréquente de bancs de coupe très performants et donc plus larges ne facilite pas la tâche. En effet, pour effectuer le démêlage et le comptage des barres, il convient d'être le plus près possible de celles-ci alors qu'en réalité le banc de coupe est interposé entre les opérateurs et la zone de stockage. Dans le cas où l'on demande, pour éviter des manutentions, un stockage de chaque côté du banc, le problème devient insoluble, sauf dans le cas d'éléments de diamètre important donc d'une certaine rigidité, qui peuvent être manipulés par leurs seules extrémités.

Généralement, les bancs de coupe sont organisés d'une manière telle qu'ils permettent de couper un lot de barres pendant la préparation du lot suivant. Les problèmes à résoudre pour préparer des barres de petit diamètre sont donc essentiellement :

- de pouvoir circuler librement le long de la zone de stockage pour accéder à un point quelconque où les barres sont emmêlées,

- de disposer d'un point de stockage intermédiaire du nombre de pièces nécessaires préparées,

- d'effectuer très rapidement le transfert de ces pièces de la zone de stockage intermédiaire vers le banc de coupe dès que celui-ci est disponible.

Si les dispositifs existants remplissent les deux dernières conditions, ils ne remplissent pas la première, ce qui exclut donc la préparation de barres de petit diamètre.

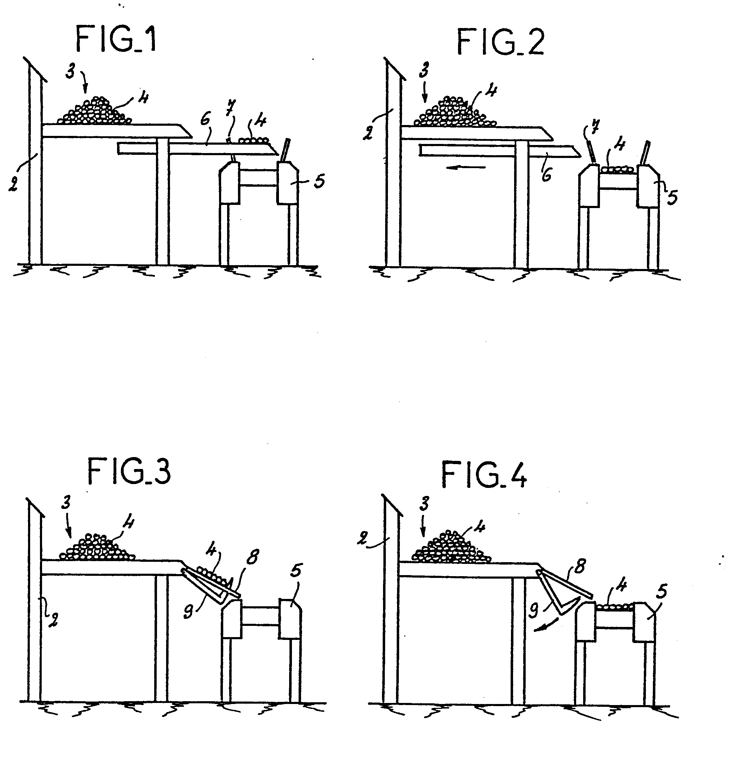

Les figures 1 et 2 du dessin schématique annexé représentent un premier dispositif de préparation et de transfert de ronds à béton vers un banc de coupe. Ce dispositif comprend un certain nombre de tréteaux (2) parallèles sur lesquels est destiné à être disposé un fardeau (3) de barres (4). Après découpe des liens du fardeau, celui-ci se présente sous la forme d'un tas représenté au dessin, dans lequel les barres (4) sont plus ou moins emmêlées.

Le banc de coupe (5), et plus précisément un convoyeur à rouleaux associé à celui-ci est disposé parallèlement à l'alignement de tréteaux (2).

Entre la zone de stockage constituée par les tréteaux (2) et le banc de coupe (5) est prévu un dispositif de préparation des barres et de transfert de celles-ci, constitué par une table (6) se présentant sous la forme d'un certain nombre d'éléments parallèles entre eux et perpendiculaires à la direction des barres (4).

Pendant qu'est effectuée une opération de coupe, les opérateurs prennent dans le fardeau (3) un certain nombre de barres (4) en l'occurrence cinq barres, qui doivent faire l'objet de la coupe suivante, et les placent sur la table de transfert (6). Une fois la préparation terminée, les barres (4) situées sur la table de transfert (6) sont amenées au-dessus du convoyeur associé au banc de coupe, après quoi, lorsque le banc de coupe est disponible, la table de transfert (6) est retirée, les barres tombant sur le convoyeur (5) du fait qu'elles sont retenues par un peigne (7) passant entre les éléments constitutifs de la table (6).

Il ressort de cet agencement qu'il n'est pas possible à un opérateur de passer entre les tréteaux (2) constituant la zone de stockage et le convoyeur (5) appartenant au banc de coupe.

Dans la forme d'exécution représentée aux figures 3 et 4, le système de préparation et de transfert des barres est constitué par un plan incliné (8) prolongeant les tréteaux (2) et reliant ceux-ci au convoyeur (5) du banc de coupe. Dans la période de préparation, les barres (4) sont maintenues sur le plan incliné par l'intermédiaire de taquets (9) escamotables par pivotement. Un certain nombre de barres (4) étant préparées, comme montré à la figure 3 du dessin, lorsque le banc de coupe doit être alimenté, il suffit de provoquer le pivotement des taquets (9) dans un sens d'escamotage de ceux-ci, les barres glissant alors sous l'effet de la gravité sur le convoyeur (5).

Dans ce cas encore, le système de transfert (8, 9) empêche le passage des opérateurs entre le convoyeur (5) du banc de coupe et les tréteaux (2) de stockage.

Le brevet allemand 929 474 décrit un dispositif de transfert de barres comprenant une série de pièces parallèles, en forme de V, accouplées les unes aux autres de façon à pouvoir pivoter simultanément entre une position dans laquelle une branche de chaque pièce en V se trouve en regard de la zone d'amenée des barres, pour réaliser le chargement d'une barre et une position dans laquelle l'autre branche de chaque élément en V se trouve en regard du système d'utilisation, en vue de réaliser le déchargement d'une barre. Cependant, compte tenu des liaisons entre les différentes pièces, ce système ne convient pas pour l'équipement d'un banc de coupe, car ne permettant pas le passage des opérateurs entre le banc de coupe et l'aire de stockage pour effectuer le demêlage des barres enchevêtrées.

La présente invention vise à remédier à ces inconvénients.

A cet effet, dans le dispositif qu'elle concerne, du type comprenant une zone de stockage des éléments en fardeaux, constituée par une série de tréteaux parallèles par exemple, auxquels sont associés des moyens permettant la préparation et le transfert des éléments vers un système d'utilisation, ces moyens étant constitués par une série de pièces parallèles entre elles, et réparties sur la longueur de la zone de stockage, dont chacune présente une forme générale de V, et est montée pivotante autour d'un axe parallèle à la direction des éléments, de telle sorte que, au cours de sa rotation, les deux extrémités de chaque pièce puissent venir en contact, respectivement, avec le bord de la zone de stockage et avec le bord du système d'utilisation, des moyens étant prévus pour provoquer un pivotement simultané de toutes les pièces en V, chaque pièce en V est articulé dans sa partie centrale, indépendamment des autres pièces, sur un support prolongeant un tréteau appartenant au dispositif de stockage des fardeaux.

D'un point de vue pratique, quand une branche de chaque pièce en V est en appui contre un tréteau de réception du fardeau, l'autre branche est sensiblement verticale et dégage un passage entre le système d'utilisation constitué par le banc de coupe dans le cas de ronds à béton, et la zone de réception des éléments sur les tréteaux. Les opérateurs peuvent ainsi circuler dans ce passage, pour démêler

0096644

4

les éléments sur toute la longueur de ceux-ci, et faire passer un certain nombre d'éléments depuis la zone de stockage, sur les pièces en V. Cette opération est réalisée lors du cisaillage des éléments précédemment amenés au banc de coupe. Lorsque la préparation est terminée, les opérateurs dégagent le passage entre les tréteaux et le banc de coupe, avant de commander un pivotement des pièces en V qui assurent l'alimentation du banc de coupe. Les pièces en V sont ensuite ramenées par pivotement en sens inverse dans leur position initiale pour la préparation suivante, tandis que l'on coupe les éléments qui viennent d'être amenés au banc. Selon une caractéristique, ce dispositif comprend une barre de liaison des extrémités des branches des pièces en V, située du côté de la zone de stockage des éléments sous forme de fardeaux.

Cet agencement assure la solidarisation des différentes pièces en V entre elles, sans gêner le passage ménagé pour les opérateurs entre les différentes pièces en V, en vue du démêlage des barres.

De toute façon, l'invention sera bien comprise à l'aide de la description qui suit, en référence au dessin schématique annexé, représentant, à titre d'exemple non limitatif, une forme d'exécution de ce dispositif dans le cas de son application à l'équipement d'un banc de coupe de fers à béton :

Figure 5 est une vue en perspective de ce dispositif ;

Figures 6 et 7 sont deux vues en bout, respectivement, en position de préparation des éléments et en position de transfert des éléments vers le banc de coupe ;

Figure 8 est une vue partielle et en bout·d'une installation comprenant plusieurs dispositifs de préparation et de transfert d'éléments.

L'installation représentée au dessin comprend, de manière connue, un certain nombre de tréteaux (10) parallèles entre eux reliés les uns aux autres par des entretoises (12).

Ces tréteaux (10) servent de zone de réception des éléments sous forme de fardeaux. Dans la forme d'exécution représentée au dessin, chaque tréteau (10) est prolongé du côté d'un convoyeur (13) appartenant au banc de coupe, par un support (14), sur lequel est articulé dans une chape (15), autour d'un axe (16) parallèle au banc de coupe, une pièce (17) possèdant une forme générale en V. L'axe d'articulation (16) est situé sensiblement au milieu de la pièce en V, et en-dessous du plan de stockage déterminé par les tréteaux (10). La pièce en V (17) présente deux branches dont la première (18) possède une longueur correspondant sensiblement à la distance entre l'axe d'articulation (16) et le bord du tréteau (10) situé de son côté, et une seconde branche (19) dont la longueur correspond sensiblement à la distance entre l'axe d'articulation (16) et le convoyeur (13).

Les différentes pièces en V (17) sont rendues solidaires les unes des autres par une barre (20) les reliant au niveau de l'extrémité de leurs branches (18).

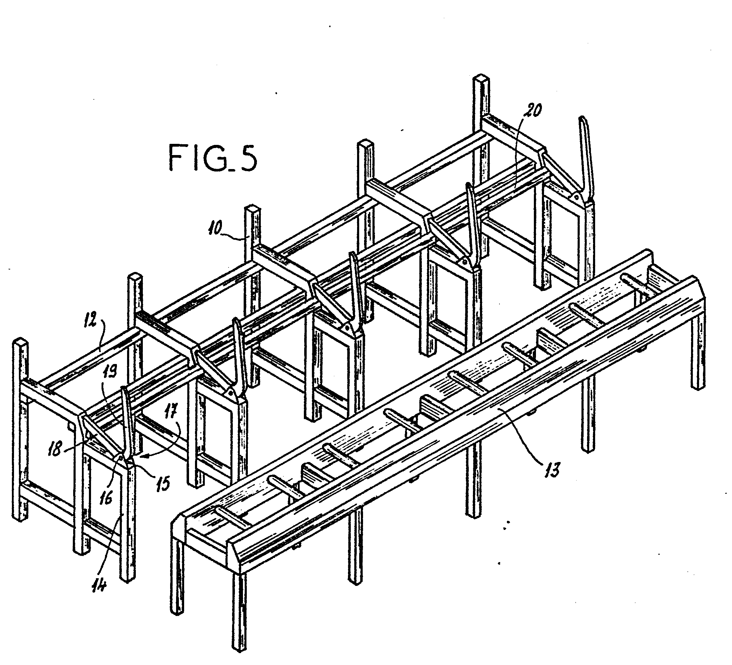

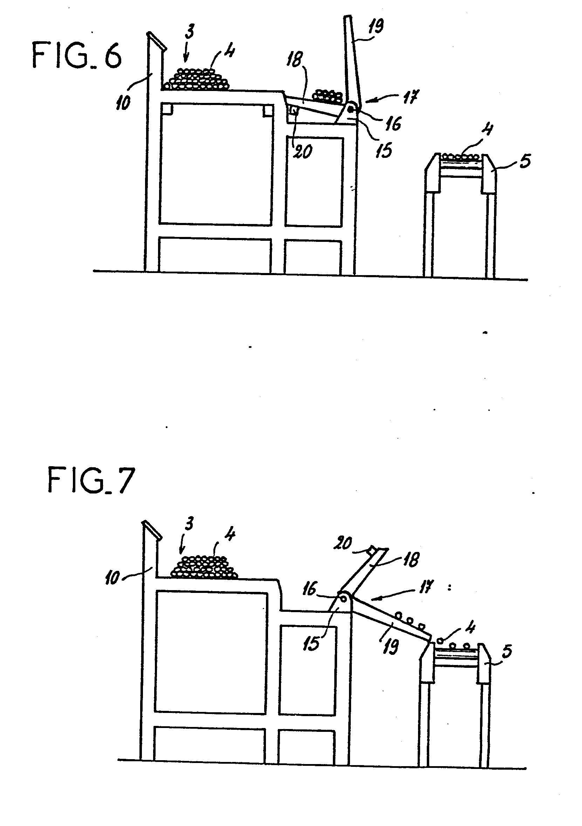

D'un point de vue pratique, et comme montré aux figures 5 et 6 du dessin, en position de préparation des éléments, chaque branche (18) d'une pièce en V (17) prolonge les tréteaux (10). Il est ainsi possible aux opérateurs de faire passer des tréteaux (10) sur les pièces en V (17) le nombre d'éléments (4) désiré, cette opération étant facilitée du fait de la possibilité d'accès entre le banc de coupe (13) et les tréteaux (10). Lorsque le banc de coupe est disponible et doit être alimenté, et que les opérateurs ont dégagé le passage situé entre le banc de coupe et la zone de stockage des éléments, l'opérateur commence le pivotement des pièces (17), amenant celles-ci dans la position représentée à la figure 7, dans laquelle les fers à béton tombent sur le convoyeur (13) du banc de coupe.

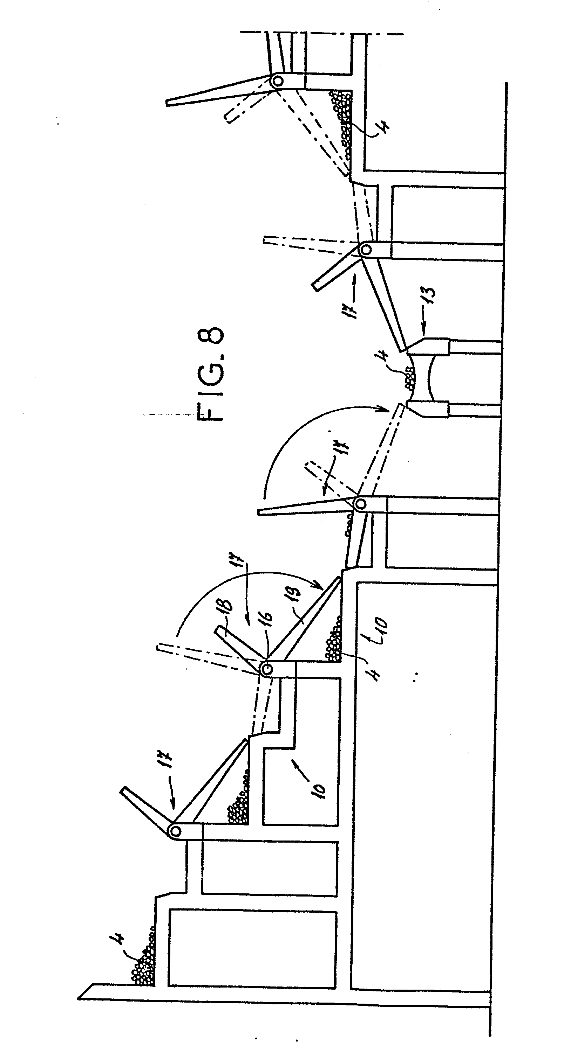

La figure 8 représente une installation comprenant, disposés de part et d'autre d'un banc de coupe (13), plusieurs séries de tréteaux (10), les tréteaux de différentes séries étant décalés verticalement à la façon d'un escalier, de telle sorte que les zones de stockage soient situées de plus en plus bas lorsqu'on se rapproche du banc de coupe (13). Ceci permet de disposer de plusieurs zones de stockage, par exemple pour des barres (4) de différents diamètres, ce qui est intéressant lorsque le banc de coupe est placé dans un lieu où il n'y a pas de pont roulant.

Chaque pièce en V (17) est dimensionnée de telle sorte que la longueur de la première branche (18) est égale à la distance entre l'axe d'articulation (16) et le bord de la zone de stockage correspondante, et que la longueur de l'autre branche (19) est égale à la distance entre l'axe d'articulation (16) et le bord de la zone de stockage situé immédiatement en-dessous, et tourné du côté du banc de coupe (13).

D'un point de vue pratique, en position de départ, les éléments (17) des différentes séries sont tous dans une position telle que les branches (19) sont sensiblement verticales et les branches (18) sont en appui contre le bord de la zone de stockage correspondante.

Si l'on désire amener au banc de coupe (13) des barres (4) situées dans la zone de stockage supérieure, il suffit de les transférer par actionnement successif des différentes séries de pièces (17). Pour amener au banc de coupe des éléments situés à un niveau inférieur, il suffit d'actionner uniquement les pièces situées entre la zone de stockage considérée et le banc.

Comme il ressort de ce qui précède, l'invention apporte une grande amélioration à la technique existante, en fournissant un dispositif de préparation et de transfert d'éléments allongés, tels que des fers à béton, qui autorise le passage entre la zone de stockage des éléments et leur zone d'utilisation. Ceci est particulièrement intéressant dans le cas de bancs de coupe comportant une zone de stockage sur chaque côté.

## REVENDICATIONS

1. - Dispositif de préparation et de transfert d'éléments allongés se présentant sous forme de fardeaux, du type comprenant une zone de stockage des éléments en fardeaux, constituée par une série de tréteaux parallèles (10) par exemple, auxquels sont associés des moyens permettant la préparation et le transfert des éléments vers un système d'utilisation (13), ces moyens étant constitués par une série de pièces (17) parallèles entre elles, et réparties sur la longueur de la zone de stockage, dont chacune présente une forme générale de V, et est montée pivotante autour d'un axe parallèle à la direction des éléments, de telle sorte que, au cours de sa rotation, les deux extrémités de chaque pièce puissent venir en contact, respectivement, avec le bord de la zone de stockage et avec le bord du système d'utilisation, des moyens étant prévus pour provoquer un pivotement simultané de toutes les pièces en V, caractérisé en ce que chaque pièce en V est articulée dans sa partie centrale, indépendamment des autres pièces, sur un support (14) prolongeant un tréteau (10) appartenant au dispositif de stockage des fardeaux.

2. - Dispositif selon la revendication 1, caractérisé en ce qu'il comprend une barre de liaison (20) des extrémités des branches des pièces en V (17) située du côté de la zone de stockage des éléments sous forme de fardeaux.

3. - Dispositif selon l'une quelconque des revendications 1 et 2, caractérisé en ce qu'il comprend plusieurs séries de tréteaux (10), les tréteaux des différentes séries étant décalés verticalement les uns relativement aux autres et les tréteaux les plus bas étant situés du côté du système d'utilisation (13), la position des supports de chaque pièce en V et la distance entre les différents tréteaux étant telles que la longueur d'une branche (18) de chaque pièce en V correspond à la distance entre l'axe d'articulation (16) de la pièce considérée et le bord de la zone de stockage correspondante et que la longueur de l'autre branche (19) est égale à la distance entre l'axe d'articulation (16) de la pièce en V et le bord de la zone de stockage située en-dessous, et tourné vers le système d'utilisation, les séries de pièces en V associées aux différentes séries de tréteaux comportant des moyens de commande indépendants les uns des autres.

FIG_1

FIG_2

FIG_3

FIG_4

0096644

0096644

FIG.5

FIG. 6

FIG. 7

0096644

FIG. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | Néant.<br><br>----- | | B 65 G    1/04<br>B 21 D   43/00<br>B 65 G   47/88 |

**DOMAINES TECHNIQUES RECHERCHES (Int. Cl. ³)**

B 65 G
B 21 D

Le présent rapport de recherche a été établi pour toutes les revendications

| Lieu de la recherche<br>LA HAYE | Date d'achèvement de la recherche<br>09-09-1983 | Examinateur<br>OSTYN T.J.M. |
|---|---|---|